# EUROPEAN PATENT APPLICATION

(11) **EP 4 454 725 A1**
(43) Date of publication of application: **30.10.2024**
(21) Application number: 24165171.0
(22) Date of filing: 21.03.2024
(51) Int. Cl.: A63F 13/40, A63F 13/44, A63F 13/67

(54) **CONTENT INTERACTION SYSTEM AND METHOD**

(30) Priority: 20.04.2023 GB 202305825
(71) Applicant: Sony Interactive Entertainment Inc., Tokyo 108-0075 (JP)
(72) Inventor: BARCIAS, Jesus Lucas, London, W1F 7LP (GB); EDER, Michael, London, W1F 7LP (GB)
(74) Representative: D Young & Co LLP

(57) **Abstract**

A content interaction system, the system comprising a content rendering unit configured to render interactive content, an input receiving unit configured to receive one or more inputs from a user, and an interaction determination unit configured to select one or more interactions to be performed with the interactive content in dependence upon the number of inputs provided by a user, wherein the selection is independent of the identity of those inputs.

## Description

### BACKGROUND OF THE INVENTION

### Field of the invention

This disclosure relates to a content interaction system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

Over time the range of input devices available to users has increased significantly, and the complexity of these input devices (and the manner in which they can be used to interact with content) has in many cases also increased. For instance, the number of buttons on a typical gaming controller is higher than with early gaming systems and the number of methods of interaction (such as the use of gyroscopes or adaptive triggers) increasing the complexity further.

While this can be advantageous in that the range of interactions between a user and content can be increased, in many cases this can lead to a burden upon a user which may cause them difficulty in providing inputs or provide a significant barrier so as to discourage attempting to provide inputs. This may be increasingly problematic for users who may have limited mobility, limited experience with using such input devices, and/or difficulty with complex button mappings.

One method for addressing this is to provide a simplified button mapping that is able to be selected by a user of a particular device or content. However, this can cause a user to have a less complete or enjoyable interaction experience as a simplified mapping may restrict a user's access to complex interactions. Alternatively, simplified (or otherwise modified) versions of the content may be provided so as to either reduce the need for such interactions or to make the content less demanding of those interactions. Such alternatives therefore result in a fundamental change to the user experience, and as such may be considered undesirable in many cases.

It is in the context of the above discussion that the present disclosure arises.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an exemplary entertainment system;
Figure 2 schematically illustrates a DualSense^{®} controller;
Figure 3 schematically illustrates an action selection method;
Figures 4 and 5 schematically illustrate examples of interactive content;
Figure 6 schematically illustrates action spaces;
Figure 7 schematically illustrates a content interaction system; and
Figure 8 schematically illustrates a content interaction method.

### DESCRIPTION OF THE EMBODIMENTS

Referring now to the drawings, wherein like reference numerals designate identical or corresponding parts throughout the several views, embodiments of the present disclosure are described.

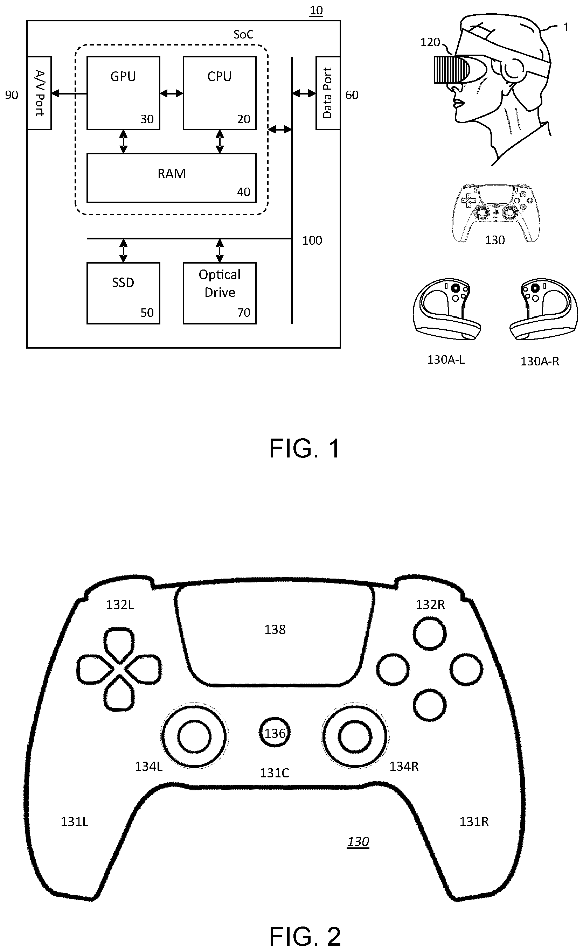

Referring to Figure 1, an example of an entertainment system 10 is a computer or console such as the Sony^{®} PlayStation 5^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the system is typically provided using one or more handheld controllers (130, 130A), such as the DualSense^{®} controller (130) in the case of the PS5, and/or one or more VR controllers (130A-L,R) in the case of the HMD.

In Figure 2, the DualSense^{®} controller 130 is illustrated as an example of a handheld controller. Such a controller typically has two handle sections 131L,R and a central body 131C. Various controls are distributed over the controller, typically in local groups. Examples include a left button group 132L, which may comprise directional controls and/or one or more shoulder buttons, and similarly right button group 132R, which comprise function controls and/or one or more shoulder buttons. The controller also includes left and/or right joysticks 134L,R, which may optionally also be operable as buttons by pressing down on them.

The controller (typically in the central portion of the device) may also comprise one or more system buttons 136, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 138, a light for optical tracking (not shown), a gyroscope (not shown) for detecting motion of the controller, a screen (not shown), haptic feedback elements (not shown), and the like.

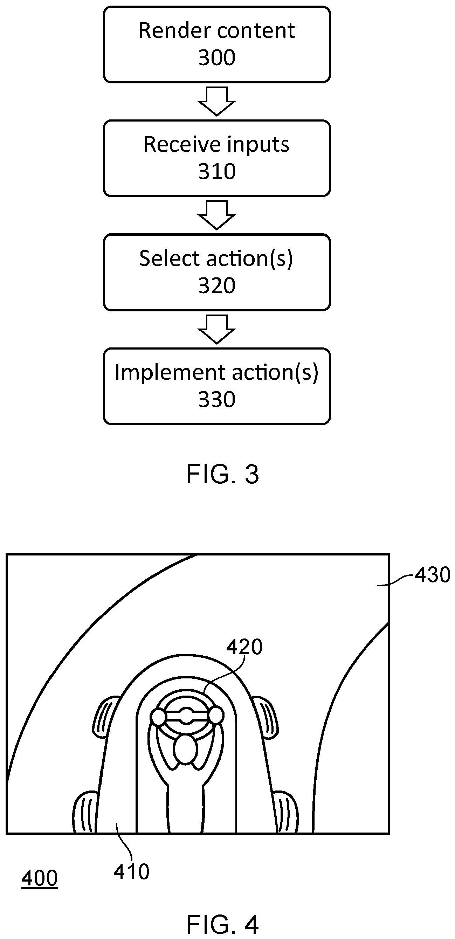

As is apparent from the example of Figure 2, controllers offer a number of different inputs for a user. Given their proximity, and the potential difficulty in remembering a mapping for such a number of inputs, it is considered that many users (particularly those with reduced motor skills or experience, such as young children) may prefer assistance. It is therefore considered advantageous that an alternative input method is provided for such users; such a method should have a reduced burden upon the user whilst maintaining at least a similar level of interactivity with the content for a user. Figure 3 schematically illustrates an example of such a method.

A step 300 comprises the rendering of interactive content by a processing device, such as a games console, personal computer, mobile phone, or server-based processing device. The content is presented to a user via an associated display screen (such as a television) or any other display device; alternatively, or in addition, the content may comprise an audio component which is presented to the user. The interactive content may be any application, although implementations of this method may be particularly suited to the provision of inputs for controlling a video game.

A step 310 comprises receiving one or more inputs, provided by a user, from the control device. These inputs may include any combination of button presses, joystick interactions, or sensed motion (for example); in addition to inputs provided using the controller, inputs may be obtained such as audio or video captured of the user, biometric information, gaze information, or any other information which may be used to characterise the inputs provided using the controller. These additional inputs may be obtained using peripherals associated with or integrated into the controller, processing device, or display device as appropriate for a particular implementation.

A step 320 comprises selecting an interaction to be performed with respect to the interactive content in dependence upon the number of inputs received from the control device, with the selected interaction intended to be the one which best represents the user's intention. The number of inputs may be determined as a number of button presses, for example, or a number of operations of a joystick; this may include both the counting of newly received inputs and those inputs which are continuous (such as a button being held down or joystick being held in a non-base position) as appropriate. Continuous inputs may be considered to be single inputs at the time at which they are first provided, for example, or may be considered to be an input provided with any predetermined frequency (such as each image frame, every second, or any other time).

In dependence upon the number of inputs that are identified, one or more interactions are selected; that is to say that it is the number of inputs that is used to determine the interaction, rather than the identity of those inputs. The specific mapping between the number of inputs and the selection interaction or interactions may be determined freely; it is generally considered that the number of selected interactions and/or their complexity should scale with the number of identified inputs. The one or more interactions may be selected from a list of interactions that are likely (or at least possible, with a weighting applied for how likely the interaction is to be the desired interaction) in the context of the interactive content, for example, or the actions of a trained agent in a game may be constrained or influenced by the number of inputs.

A step 330 comprises the implementation of the interaction, thereby controlling the interactive content. For instance, this may comprise causing a user's avatar to perform a particular action in a game, or a particular function or process to be executed in an application that is being executed.

An implementation of this method therefore enables a user to interact with content, such as a video game, in an intuitive manner without requiring knowledge of an input mapping. For instance, a young child may play a game by pressing any button they wish when they want to perform an action without leading to negative outcomes; similarly, a player who struggles with remembering input mappings, or has physical difficulty providing a correct input, may be able to play a game without being penalised for making a mistake with the inputs.

Figure 4 schematically illustrates a scenario in which such an input method may be utilised. In this Figure, the user is presented with a view 400 which includes a portion of a vehicle 410 and a steering wheel 420. The user's vehicle 410 is travelling along a road 430, and has encountered a bend.

In order to operate the vehicle 410, it is considered that a user should be holding down a button (or providing another continuous input) which is interpreted as an intention to accelerate. Given the overarching goal of a racing game of reaching the finish line as quickly as possible, the intention of a user can be discerned with a high level of reliability at any given game state. For instance, in the scenario of Figure 4 it can be assumed that if a user provides a second input, it is to steer around the bend as following the track is typically the fastest way to the finish or is otherwise required by the rules of the game.

In view of the use of a simplified input method, it is also considered that a secondary function can be provided with this additional input - such as an appropriate application of the brakes - in recognition of the fact that a user may desire gameplay assistance. In a similar manner, the user may not be required to provide a continuous input to represent the intention to accelerate; this input may be provided continuously, or at least so long as a contrasting input (such as braking) is not inferred.

Alternatively, it may be required that an additional input is provided by the user to cause a braking to be applied. In such a case, a first received input could be inferred to be representative of an intent to steer, while the second received input could be inferred to be representative of an intent to brake (for example). Similarly, if both inputs are provided simultaneously then it may be considered that both actions are intended to be taken.

While inputs are discussed generally here, it is also considered that the input type has a bearing on the type of interaction that is determined to be intended by the user. For instance, an input using a stick may be considered to be representative of an intent to steer, while an input using a button is representative of an intent to brake or accelerate. The direction in which the stick is manipulated and the identity of the specific button can still be ignored in such a case, but this may be useful as the input may still be intuitive to a user without requiring specific input mapping knowledge.

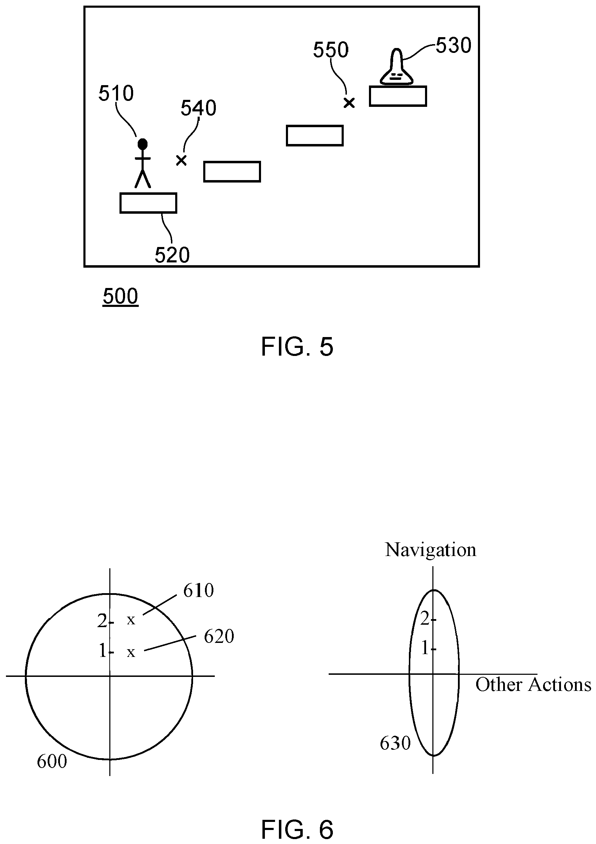

Figure 5 schematically illustrates an additional example of a game as the interactive content. In this Figure, a view 500 presented to the user comprises a player-controlled character 510 and a series of platforms 520. An enemy 530 is also present in the view 500.

Based upon the character's 510 position in the scene, a single input may be considered to be representative of an intention to move to the right; this may be in view of the known task at hand (progressing through the level, which requires going in that direction), historical information (the character has come from the left), and/or situational factors (a jump would be ineffective, and an attack wouldn't hit any enemies, so neither of these would be likely intentions). The provision of two inputs may instead be interpreted as an intention to perform a running or sideways jump - that is, a move to the right, and a jump. This may be based upon the same considerations as those for inferring the intention behind a single input.

Were the character 510 to instead be in the position 540, the provision of a single input would be interpreted differently due to the fact that the character 510 would fall between the platforms 520 without further action. In this case, the input may be determined to represent an intention to perform a double-jump action to continue in the same direction (assumed to be towards the right) with a different trajectory so as to enable them to reach the next platform 520. A pair of inputs could be regarded as an intention of the user to change the direction of the character 510 as well as performing the double-jump action, for instance, as this may represent the most likely or effective combination of actions in the circumstances.

With the character 510 instead being in the position 550, the selected actions may be different to those when in the position 540. In particular, the presence of the enemy 530 offers a new likely intent for the user - attacking the enemy 530. The significance applied to each of the considered actions (attack, double-jump, change direction) may be determined in any suitable manner and may be context specific - for instance, a particularly dangerous enemy may lead to the 'attack' action being prioritised due to a wish to strike before being attacked. Similarly, if it is detected that the enemy is about to attack (for instance, due to the start of an attack animation being shown) then a block action could be selected rather than an attack action. This example illustrates that the intention of the user may vary significantly even in similar contexts.

In these examples, a context-specific ranking of the possible actions is referenced in response to the number of received inputs. In response to a single input being received, the first action in the list is implemented; in response to two inputs being received, the first and second actions in the list are implemented, and so on. The ranking of the actions is determined such that the most likely and/or effective actions that can be taken at the time of the input are listed first while the least likely and/or effective actions are listed last. The likelihood or effectiveness of the actions may be based upon an analysis of the context alone (for instance, if an enemy is able to be hit then assume that the user would be likely to want to attack, or if a user's weapon is low on ammunition then a reload action could be expected), or may consider sources of data such as information from developers ranking the actions in particular contexts and/or analysis of data representing how previous players (using a full button-mapping, rather than the simplified interaction method described presently) behaved in that context.

The list of actions may also indicate a level of complexity of the action (measured in terms of the number of inputs required to achieve that effect in a standard mapping, for instance) which can lead to a threshold number of inputs being required to be received before the action can be implemented. An example of this is a 'special move' in a game that requires a combination of buttons to be pressed simultaneously. The selection process may then be implemented with the number of received inputs representing an 'action budget', with actions selected from the top of the list and working down until the budget is 'spent'; in this case, the complexity of the input is represented by an 'input cost', such as a complex action costing two inputs from the budget whereas a simple action costs only one. This can lead to multiple inputs from a user resulting in a single (albeit more complex) action being implemented. Alternatively, different lists may be provided on the basis of the number of received inputs.

Of course, selections from the list may be subject to additional criteria or rules so as to ensure suitable outcomes are obtained; for instance, certain pairs or groups of actions may be designated as being mutually exclusive (such as 'select' and 'cancel' when navigating a menu, or 'turn left' and 'turn right' when navigating a car),
In some cases, the number of received inputs may be considered too high or too frequent - in such cases it is considered that one or more of the received inputs may be ignored. This can prevent abuse by a player in which they can provide inputs in an indiscriminate manner to attempt to obtain optimal results; of course, this may also (or instead) be managed in other ways, such as giving more complex actions an in-game cost to discourage over-use and thereby cause a user to be more measured with their input provision. Other methods for handling this may be to include a negative action on the action list (such as 'self-destruct' or 'apply handbrake') at a particular rank to prevent a user providing too many inputs without consequence, or actions lower down the list may cancel out those higher up the list (such as 'steer left' and 'steer right'). For instance, the mutual exclusivity of actions may be conditional upon a below-threshold number of inputs being received.

In some implementations, it may be considered advantageous to implement a level of uncertainty in the mapping between the number of received inputs and the action to be taken. For instance, rather than always selecting actions from the top of the list a random factor may be implemented which causes an alternative option to occasionally be selected. This may be useful to prevent optimal play, as continual success due to an optimal action being selected each time may become boring for a player as well as cause issues in comparing player performances with those not using the same input scheme.

In line with the above discussion, it is therefore apparent that the mapping between the received number of inputs and the actions that are taken may be highly context-dependent, and may include any one-to-one, one-to-many, many-to-one, or many-to-many configuration as appropriate. The mapping may also include random factors, so as to prevent a user obtaining a perfect playthrough of a game (for example) by simply pressing a number of inputs at the correct times.

The selection of one or more actions in response to inputs may be performed based upon one or more objectives or goals in addition to the game state context. These goals may include any number of short-term, medium-term, or long-term goals, or even persistent goals; in the context of a racing game, examples of these goals may be 'navigate the bend', 'overtake the car in front', 'win the race', and 'don't leave the racetrack' respectively. Such goals may be used to modify the priority of particular actions in dependence upon their contribution to achieving one or more of these goals.

In some implementations it may be considered advantageous to rank the goals or otherwise assign a priority level so as to enable the selection of actions to reflect the importance of a respective goal. For instance, in the racing example, the long-term goal of 'win the race' would have much higher priority than any of the other goals and as such actions that contribute to this should be prioritised to achieve a high level of performance of the agent subject to the actions. In contrast, the persistent goal of 'don't leave the racetrack' may have a much lower priority - while a useful guide for the agent, in that leaving the track is often associated with a speed reduction or time penalty, it is clear that winning the race would be more important to the user. In line with this, each of the available or possible actions may therefore be evaluated in respect of their contribution to these goals with the evaluation considering both the value of the action towards achieving at least one of the goals and the value of the goals to which the action contributes towards the achievement.

In some cases, a single value may be generated for each action which is representative of its overall contribution to the set of defined goals. This single value should be generated in dependence upon both the value of the action towards achieving at least one of the goals and the value of the goals to which the action contributes towards the achievement; the single value may be a sum of these weighted contributions, for instance. The effect of this is to generate a single value which is representative of the an action's contribution to all goals, such that an action which contributes to a plurality of goals in a meaningful way can be considered to have a higher priority for selection than an action which contributes only to the primary goal (that is, the highest-ranked or highest-priority goal).

The contribution of an action towards a goal may be determined in any suitable manner; in some cases, this may be based upon a predictive process which estimates the chances of a goal being achieved based upon a first game state (the current game state) and a second game state (the game state if the second action were to be performed). The contribution of the action may be taken to be the difference between the success chances as measured for each game state. Of course, any other method of determining a contribution may also be utilised as appropriate - such as the provision of predefined metrics that correlate with a particular goal being achieved, such that a contribution can be measured in dependence upon the impact upon those predefined metrics.

A machine learning based action selection model may be trained in any suitable manner; in some approaches a model may be used to learn how to play a game, for example, while in others a model may be trained to imitate players of a game (which can lead to a model which is able to play the game independently).

In the first case, a reinforcement learning process may be used to train an agent operating in the game. Rewards may be associated with any suitable goals, such as the completion of a level or more minor goals such as those which indicate progress or minor successes (such as correctly navigating a bend in a racing game, or successfully overtaking an opponent). Similarly, negative rewards may be associated with negative outcomes, such as failure in a mission or a particular threshold (such as health, speed, or ammunition levels) being reduced below a particular value. Of course, any other training process may be utilised as appropriate; the use of reinforcement learning is considered to be exemplary only.

In the second case, a generative adversarial network may be a more suitable approach to training. In this example, training data comprising videos (or other representations) of the gameplay of a number of players may be used. By analysing user actions in conjunction with the context of the game at the time of the user actions, a model may be trained to recognise how players respond in a range of game contexts. Recordings of gameplay comprising actions performed by a trained model can then be supplied to a discriminator that is trained to recognise player gameplay (for instance, on the basis of skill level, recognised patterns of gameplay, or metrics such as response time), so as to determine whether the trained model accurately imitates player gameplay.

Of course, machine learning based implementations are not considered essential to implementations of the present disclosure, as more traditional computer-controlled agents (such as those used for a single player to play against in games) may be sufficient to navigate a level or other gameplay. This may be particularly suitable as an alternative in that optimal gameplay is not required for a successful implementation of this disclosure, it is only considered relevant that contextually appropriate actions are selected in response to one or more user inputs.

Returning to the user's inputs, it is considered that in some cases external information (that is, data other than that identifying a button press or other input) may be used to characterise the inputs. This external information is not used as an input itself, but is instead used to vary the selection of an action according to the received input.

A first example of this is the capturing of audio (for example, via a microphone associated with an input device held by the user) in the environment of the user at the time of the input being provided; a particular action may be preferentially selected in dependence upon utterances or vocalisations by the user. For instance, if a user were heard to call out 'turn' whilst pressing a button in a racing game, then the priority associated with steering actions may be increased to reflect this apparent desire. This can enable a user's intentions to be derived more reliably, despite the provided input not being tied to any particular function.

A second example of this is the imaging of a user (or other methods of tracking a user's motion or that of an associated peripheral) so as to identify any body language or gestures that may be indicative of a desired income. For example, it is relatively common for players of a driving game to tilt a controller or lean to one side when attempting to turn a corner in a driving game - this is particularly common with players who are less experienced, and such may be common amongst players who would seek to use implementations of the present disclosure. In one example, a user may lean to the left when they desire a vehicle they control to turn left - in response to this, a detected input can be assumed to correspond to a desire by the user for their vehicle to turn left and corresponding actions can therefore be preferentially selected or otherwise have their selection priority increased.

Any other external information that provides context for the user's inputs may also (or instead) be considered as appropriate, including information obtained from images captured of a user, biometric sensor readings for a user, audio of the user or the environment, and/or detection of motion of a user. These may be captured using any suitable sensors, such as cameras, heart rate monitors, galvanic skin response sensors, microphones, and/or inertial motion sensors. For example, a user's heart rate may be useful to indicate whether a user is scared in a game (and therefore more likely to run away from a threat) or is calm (and therefore less likely to run away) - based upon this indication, corresponding actions may be selected for the user's character in response to inputs by the user as appropriate.

While discussed in the context of determining an action to be taken in response to receiving an input, it is also envisaged that some implementations of the present disclosure may also store a temporary key binding for a game or other interactive application. This can leverage the fact that a player will likely correlate particular inputs with particular actions, even if they are not familiar with a predefined key mapping. This may be on a one-to-one basis, such that a particular action is correlated with a particular input, thereby enabling a user to generate a key mapping on-the-fly. This may then be discarded at the end of a play session or at any other time (such as between different activities associated with a game), or may be stored for future use.

Alternatively, a one-to-many basis may be used for the key binding such that a group of actions can be associated with a single input with one of the group being selected based upon in-game and/or user context in accordance with the above discussion. This may be derived from a tracking of which inputs are provided by a user in a number of different contexts, such that if the same input is consistently provided for a number of actions then it can be inferred that if the user presses this input the one of those actions is intended to be performed.

For example, a particular input may be associated with interactions with objects (such as pick up an object, fire a weapon, or use a power-up) and as such the available actions in response to this input being provided may be reduced to comprise only these actions (and optionally, related actions). For instance, the list of ranked actions may be edited to only recite a subset of the actions available to an agent (such as the user's avatar) in respect of that particular input. In this case, a number of input-specific mappings may be provided or a single mapping may be provided which comprises input-specific priorities or weightings for actions (such as setting a weighting or priority for an action to zero if the action is not correlated with a particular input). As in the one-to-one example, this mapping may be stored for any suitable amount of time as considered appropriate for a given implementation.

The above discussion has been provided largely in the context of an agent (such as a character being controlled by a player of a game) performing actions in response to inputs provided by a user. However, it is also envisaged that implementations of the present disclosure may adopt a different (although related) approach.

In this alternative implementation, an agent is self-sufficient in that it determines which actions to take independent of the user. For instance, an agent may be trained to complete an objective or otherwise progress within a game without user input. The user is then able to influence the actions of this agent by providing inputs which define an action space from which the agent is able to select actions to take. The action space therefore constrains the actions of the agents so as to limit their ability to achieve an objective. Of course, the action space may be considered optional and any other approach to determining a set of allowable actions may be considered appropriate as an alternative or additional feature.

The correspondence between inputs provided by a user and the action space may be determined in any suitable manner. In some examples, the action space may be defined based upon the number of inputs provided - a single input may enable actions such as 'jump' or 'attack' to be selected, with more complex actions (such as 'jump and attack simultaneously') only falling within the action space defined by multiple inputs. An example of this is shown in Figure 6, with the action space 600 being marked to show 'jump' (reference 610) and 'jump and attack simultaneously' (reference 620). While shown as a two dimensional space, it is of course considered that a one-dimensional space may be used or a three-dimensional space (or more). In the case that a multi-dimensional action space is used, each dimension may correspond to a different action type, for example, or any other method for categorising actions.

In some cases, it may be advantageous to reduce the size of the action space in response to increasing number of inputs being provided above a threshold. This threshold may be defined as the number required to define a sufficiently large action space to enable the agent to select the optimum action, for example, or any other threshold (for instance, this number plus one may be a suitable threshold, or any arbitrary value). This can penalise a user that provides a large number of inputs at all times so as to achieve optimal play, thereby reducing the likelihood of abuse of the agent to achieve high scores or beat other opponents unfairly.

In some implementations, the action space may not be symmetric; for instance, the action space 630 in Figure 6 shows an action space which is weighted towards navigation actions rather than non-navigational actions (such as interacting with objects). This may be due to the inputs provided by a user being a press of a directional button or a movement of a joystick, which are often considered to correspond to navigational actions (such as moving in a particular direction). This can enable greater control of the action space by a user. This asymmetry may be implemented in any suitable fashion; for instance, applying a scaling factor to the inputs in respect of a particular axis. In the example of the action space 630, this could be interpreted as a single action being provided with a greater-than-one scaling in the y-axis (navigation) and a less-than-one scaling in the x-axis (other actions).

While described as only performing actions in accordance with user inputs, in some cases the agent may be configured to perform basic actions (such as walking through an environment towards a target location, or applying an acceleration in a driving game) autonomously with further actions being taken in accordance with additional inputs. In such cases, the basic actions may be associated with an input number of 'zero', for example, so as to enable these actions to be taken when no user input is provided.

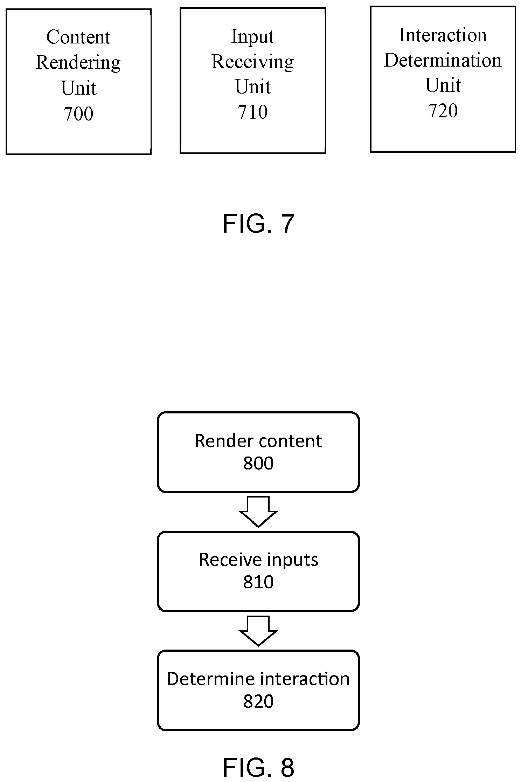

Figure 7 schematically illustrates a content interaction system, the system comprising a content rendering unit 700, an input receiving unit 710, and an interaction determination unit 720. These functional units may be implemented by any suitable processing hardware, such as the CPU and/or GPU of the entertainment system discussed with reference to Figure 1. In some implementations this functionality may be distributed amongst a number of devices, particularly in a cloud gaming implementation or the like in which at least some of the processing may be performed locally and the remainder remotely to the user's device.

The content rendering unit 700 is configured to render interactive content, such as computer applications and/or video games. The rendering may comprise the generation of video and/or audio content for presentation to a user via a display device.

The input receiving unit 710 is configured to receive one or more inputs from a user, for instance from a peripheral device (such as a games controller) or from sensors operable to detect inputs by a user such as motion tracked by cameras configured to capture images of the user. The input receiving unit 710 may be configured to receive any suitable inputs from a user, including one or more of button presses, trigger pulls, joystick manipulations, gestures, and detected motion.

The interaction determination unit 720 is configured to select one or more interactions to be performed with the interactive content in dependence upon the number of inputs provided by a user, wherein the selection is independent of the identity of those inputs. In other words, the interaction determination unit 720 is configured to enable a user to interact with the interactive content based upon the number of inputs that they provide without the requirement of a predefined mapping between inputs and actions. This selection of an interaction is intended to represent a user's likely intent when providing the one or more inputs, or an otherwise desirable interaction (such as progressing in a game).

This selection may be performed in accordance with any of a number of different considerations in addition to the number of inputs, a number of which are provided as examples below.

The interaction determination unit 720 may be configured to select a number of interactions that is proportional to the number of inputs provided by the user, such that the more inputs that are provided by a user the more interactions (such as agent actions in a game) are selected. For instance, a user providing one/two/three inputs can lead to a selection of one/two/three interactions; of course, the number of interactions is not necessarily the same as the number of inputs, but can be selected freely.

Alternatively, or in addition, the interaction determination unit 720 may be configured to select one or more interactions having a complexity that is proportional to the number of inputs provided by the user. For instance, a user providing a single input may lead to a 'jump' action being performed, while a user providing two inputs may lead to a 'running jump' action being performed with the running jump being regarded as a single action.

In some embodiments, the interaction determination unit 720 is configured to select the one or more interactions in dependence upon a context associated with the interactive content at the time of the inputs being received. For instance, in a driving game a 'turn' action may be chosen as the selected interaction preferentially when the user's car is approaching a bend on the track relative to when they are on a straight piece of track. Examples of considerations of context are discussed above with reference to Figure 5, for example, although it is considered that any context within the interactive content that may make some interactions more likely or desirable than others may be considered. The context may be determined through the use of any suitable analysis of the content, including using game state data, analysing images of the content as it is displayed, analysing audio associated with the content, or the analysis of any other data.

In some embodiments, the interaction determination unit 720 is configured to select the one or more interactions in dependence upon one or more non-input actions performed by a user. This includes any suitable actions which provide context for the user's inputs - examples include gestures while pressing a button (with the gestures not being recorded as an input), or a vocalisation at the time of providing the input. One example of this is the tracking of a user's leaning when playing a racing game - while the leaning is not regarded as an input, this may be identified to inform the selection process as an indicator of user intent. In addition to actions, other measurements of a user's activity (such as heart rate) may also be considered as a part of the selection process to assist in determining a user's likely intent.

In some embodiments, the interaction determination unit 720 is configured to select the one or more interactions in dependence upon a user profile. The user profile may indicate a user's preferences for particular playstyles or action types (such as 'aggressive' rather than 'defensive') on a per-game, per-genre, or any other basis. This information can then be used to determine which interactions should be selected to best represent the user's intent, as this information can be used to infer a likely user intent with a greater degree of reliability. Information relating to user's preferred characters in games or whether they like to engage in side quests (or otherwise act in a 'completionist' manner) can also be used to assist in inferring a user's likely intent, as can other data such as demographic information.

In some embodiments, the interaction determination unit 720 is configured to select the one or more interactions in dependence upon a predetermined threshold number of inputs, such that if the threshold is exceeded the number of selected interactions is reduced. This can be implemented so as to reduce the effectiveness of the selected interactions in response to a user providing inputs in an indiscriminate manner. Any suitable threshold may be defined, and this may be pre-set for the interactive content as a whole or may be defined in a more specific and/or dynamic manner.

For instance, the threshold may be dynamic in response to the number of interactions that are able to be selected from in a particular context, or the number of interactions that is identified as being optimal. For example, if a running jump is defined as being the optimal action at a given time and selection of this requires two inputs by a user, then a threshold of three may be defined such that a user providing four inputs does not lead to the selection of the running jump. This may be implemented by considering the four inputs to represent a single input or no input at all in response to the threshold being exceeded.

In some embodiments, the interaction determination unit 720 is configured to select the one or more interactions in dependence upon a random factor. This may be a percentage chance of a sub-optimal action being selected, for example, so as to reduce the chances of a user achieving perfect gameplay with such a system. Similarly, interactions with the same or similar likelihood of corresponding to user intent can be selected from in a less consistent manner. This can therefore also enable a variety in the interactions to be achieved.

In some embodiments, the interaction determination unit 720 is configured to select the one or more interactions from a list of possible interactions, wherein the list of possible interactions is ranked according to a likelihood of the input matching the user's intent. This may be a list of all possible interactions available within the interactive content, or a list of those interactions available at that particular time. The likelihood of the input matching the user's intent may be based upon any one or more of the considerations described above, such as the context in which the inputs are provided within the interactive content (such as a game state) or the context relating to the user directly.

Alternatively, implementations of the present disclosure may be provided using a trained model for interacting with the interactive content. In this case, the interaction determination unit 720 may be configured to select the one or more interactions from a list of actions generated by a trained model associated with the interactive content. This may be implemented in accordance with the discussion of the action space described above, for example. In this case, a trained model is able to interact with content in a manner that is constrained by the number of inputs provided by a user such that the actions available to the model are limited in accordance with the number of inputs provided.

Once the interaction to be performed has been selected, this is then applied to control the interactive content. This may comprise the control of a player's in-game avatar, for instance.

The arrangement of Figure 7 is an example of a processor (for example, a GPU, and/or CPU located in a games console or any other computing device) that is operable to enable a user to interact with content, and in particular is operable to:
render interactive content;
receive one or more inputs from a user; and
select one or more interactions to be performed with the interactive content in dependence upon the number of inputs provided by a user, wherein the selection is independent of the identity of those inputs.

Figure 8 schematically illustrates a content interaction method which can be implemented in accordance with any of the examples described above.

A step 800 comprises rendering interactive content, including audio and/or video that is able to be presented to a user.

A step 810 comprises receiving one or more inputs from a user, such as button presses or gestures indicating an intention to interact with the interactive content.

A step 820 comprises selecting one or more interactions to be performed with the interactive content in dependence upon the number of inputs provided by a user, wherein the selection is independent of the identity of those inputs. In other words, the provided inputs are considered to be indicators of an intent of a user to interact with the interactive content without the identity of the provided inputs necessarily being indicative of the specific intention of the user.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A content interaction system, the system comprising:
a content rendering unit configured to render interactive content;
an input receiving unit configured to receive one or more inputs from a user; and
an interaction determination unit configured to select one or more interactions to be performed with the interactive content in dependence upon the number of inputs provided by a user, wherein the selection is independent of the identity of those inputs.

2. A system according to claim 1, wherein the interaction determination unit is configured to select a number of interactions that is proportional to the number of inputs provided by the user.

3. A system according to any preceding claim, wherein the interaction determination unit is configured to select one or more interactions having a complexity that is proportional to the number of inputs provided by the user.

4. A system according to any preceding claim, wherein the interaction determination unit is configured to select the one or more interactions in dependence upon one or more non-input actions performed by a user.

5. A system according to any preceding claim, wherein the interactive content is a video game.

6. A system according to any preceding claim, wherein the input receiving unit is configured to receive inputs including one or more of button presses, trigger pulls, joystick manipulations, gestures, and detected motion.

7. A system according to any preceding claim, wherein the interaction determination unit is configured to select the one or more interactions in dependence upon a user profile.

8. A system according to any preceding claim, wherein the interaction determination unit is configured to select the one or more interactions in dependence upon a predetermined threshold number of inputs, such that if the threshold is exceeded the number of selected interactions is reduced.

9. A system according to any preceding claim, wherein the interaction determination unit is configured to select the one or more interactions in dependence upon a context associated with the interactive content at the time of the inputs being received.

10. A system according to any preceding claim, wherein the interaction determination unit is configured to select the one or more interactions in dependence upon a random factor.

11. A system according to any preceding claim, wherein the interaction determination unit is configured to select the one or more interactions from a list of possible interactions, wherein the list of possible interactions is ranked according to a likelihood of the input matching the user's intent.

12. A system according to any of claims 1-10, wherein the interaction determination unit is configured to select the one or more interactions from a list of actions generated by a trained model associated with the interactive content.

13. A content interaction method, the method comprising:
rendering interactive content;
receiving one or more inputs from a user; and
selecting one or more interactions to be performed with the interactive content in dependence upon the number of inputs provided by a user, wherein the selection is independent of the identity of those inputs.

14. Computer software which, when executed by a computer, causes the computer to carry out the method of claim 13.

15. A non-transitory machine-readable storage medium which stores computer software according to claim 14.
